# EUROPÄISCHE PATENTSCHRIFT

(11) **EP 3 894 714 B1**
(45) Veröffentlichungstag und Bekanntmachung des Hinweises auf die Patenterteilung: **15.03.2023**
(21) Anmeldenummer: 19835590.1
(22) Anmeldetag: 09.12.2019
(51) Int. Cl.: F16C 17/10, F03D 80/70, F16C 27/02, F16F 15/04, F16C 35/02, F16C 23/04, F16C 25/04

(54) **GONDEL FÜR EINE WINDKRAFTANLAGE**
NACELLE FOR A WIND TURBINE
NACELLE POUR UNE ÉOLIENNE

(30) Priorität: 13.12.2018 AT 511142018
(43) Veröffentlichungstag der Anmeldung: 20.10.2021
(73) Patentinhaber: Miba Gleitlager Austria GmbH, 4663 Laakirchen (AT)
(72) Erfinder: HAGER, Gunther, 4563 Micheldorf (AT); HÖLZL, Johannes Sebastian, 4880 Berg im Attergau (AT); REISENBERGER, Johannes, 4694 Ohlsdorf (AT)
(74) Vertreter: Burger, Hannes
(86) Internationale Anmeldenummer: PCT/AT2019/060426
(87) Internationale Veröffentlichungsnummer: WO 2020/118334

(56) Entgegenhaltungen:
- DE-B3-102013 211 710
- US-A1- 2015 017 000
- US-A1- 2015 159 693

## Beschreibung

Die Erfindung betrifft eine Rotorlagerung zur Lagerung einer Rotornabe an einem Gondelgehäuse einer Gondel für eine Windkraftanlage.

Aus dem Stand der Technik sind diverse Rotorlagerungen bekannt. Eine Rotorlagerung ist beispielsweise aus der AT509625B1 bekannt. Bei diesen bekannten Rotorlagerungen tritt das Problem auf, dass es bei einer Verkippung des inneren Ringelementes relativ zum äußeren Ringelement, welche aufgrund eines auf die Rotorlagerung wirkenden Kippmomentes auftritt, zu einer lokalen Überbeanspruchung der Gleitlagerelemente kommt. Dies kann zu einem erhöhten Verschleiß bzw. in weiterer Folge zu einer verminderten Lebensdauer der Gleitlagerelemente führen.

Die DE 10 2013 211 710 B3 offenbart die Merkmale des Oberbegriffs von Anspruch 1, eine Windkraftanlage mit einem Gleitlager, wobei das Gleitlager eine erste Lagerkomponente und eine zweite Lagerkomponente umfasst. Die erste Lagerkomponente und die zweite Lagerkomponente sind relativ zueinander drehbar um eine gemeinsame Rotationsachse angeordnet. Das Gleitlager weist mindestens einen Gleitbelag auf, der zwischen der ersten Lagerkomponente und der zweiten Lagerkomponente angeordnet ist. Der Gleitbelag weist eine Kontaktfläche auf, die für einen Kontakt mit einem Schmiermittel vorgesehen ist. Die Kontaktfläche weist eine Gleitbelagskanalöffnung zu einem Gleitbelagskanal auf, wobei der Gleitbelagskanal den Gleitbelag durchquert und dazu vorgesehen ist, Schmiermittel in einen Bereich zwischen der ersten Lagerkomponente und der zweiten Lagerkomponente einzuführen. Schließlich weist der Gleitbelag auf der Kontaktfläche eine Rille auf und die Rille umfasst die Gleitbelagskanalöffnung. Weiters kann vorgesehen sein, dass der Gleitbelagsträger und/oder der Gleitbelag biegsam ausgebildet sind.

Die US 2015017000 A1 offenbart eine Rotorlagerung zur Lagerung einer Rotornabe an einem Gondelgehäuse einer Gondel für eine Windkraftanlage, wobei die Rotorlagerung ein inneres Ringelement und ein äußeres Ringelement aufweist, wobei zwischen dem inneren Ringelement und dem äußeren Ringelement mehrere Gleitlagerelemente angeordnet sind, welche am inneren Ringelement befestigt sind, wobei am Gleitlagerelement eine Gleitfläche ausgebildet ist, welche mit einer Gegenfläche zusammenwirkt, die mit dem äußeren Ringelement gekoppelt ist.

Dokument US 2015159693 A1 offenbart ein Azimuthlager für eine Windkraftanlage, wobei am Gleitlagerelement eine Gleitfläche ausgebildet ist, wobei am Gleitlagerelement an der zur Gleitfläche gegenüberliegenden Seite eine flexible Unterstützung für das Gleitlagerelement ausgebildet sein kann.

Aufgabe der vorliegenden Erfindung war es, die Nachteile des Standes der Technik zu überwinden und eine Rotorlagerung zur Verfügung zu stellen, welche eine erhöhte Lebensdauer aufweist.

Diese Aufgabe wird durch eine Vorrichtung und ein Verfahren gemäß den Ansprüchen gelöst.

Erfindungsgemäß ist eine Rotorlagerung zur Lagerung einer Rotornabe an einem Gondelgehäuse einer Gondel für eine Windkraftanlage vorgesehen. Die Rotorlagerung weist zumindest ein inneres Ringelement und zumindest ein äußeres Ringelement auf, wobei zwischen dem inneren Ringelement und dem äußeren Ringelement zumindest ein Gleitlagerelement angeordnet ist, welches am inneren Ringelement oder am äußeren Ringelement befestigt ist. Am Gleitlagerelement ist eine Gleitfläche ausgebildet, welche mit einer Gegenfläche zusammenwirkt, die mit jenem Ringelement gekoppelt ist, an welchem das Gleitlagerelement nicht befestigt ist. Die Gegenfläche ist nachgiebig ausgebildet.

Die erfindungsgemäße Rotorlagerung weist den Vorteil auf, dass sich die Gegenfläche an die Gleitfläche des Gleitlagerelements anpassen kann. Dadurch kann erreicht werden, dass die Gleitfläche des Gleitlagerelementes vollflächig an der Gegenfläche aufliegt, wodurch eine lokale Überbeanspruchung des Gleitlagerelementes vermieden werden kann. Insbesondere kann dadurch die Lebensdauer des Gleitlagerelementes erhöht werden. Dass die Gegenfläche nach giebig ausgebildet ist, bedeutet insbesondere, dass sich die Gegenfläche flexibel an die Gleitfläche des Gleitlagerelementes anpassen kann. Insbesondere kann vorgesehen sein, dass die Nachgiebigkeit der Gegenfläche über die werkstoffbedingte geringfügige elastische Nachgiebigkeit von herkömmlichen Anordnungen, wie sie in der AT509625B1 beschrieben ist, hinausgeht, wobei insbesondere verjüngte federnde Querschnitte oder entsprechende Gelenkverbindungen vorgesehen sind, um die Nachgiebigkeit zu erreichen.

Weiters kann es zweckmäßig sein, wenn die Gegenfläche mit einem Federelement gekoppelt ist, welches an jenem Ringelement befestigt ist, an welchem das Gleitlagerelement nicht befestigt ist. Durch die Kopplung der Gegenfläche mit einem Federelement kann erreicht werden, dass die Nachgiebigkeit der Gegenfläche durch elastische Materialverformungen im Federelement gewährleistet wird. Bei einer derartigen Ausführungsvariante sind keine gesonderten Gelenkverbindungen notwendig.

Ferner kann vorgesehen sein, dass ein Abschnitt jenes Ringelementes an welchem die Gegenfläche ausgebildet ist, einen nachgiebigen Bereich aufweist. Hierbei kann vorgesehen sein, dass die Gegenfläche direkt am Ringelement ausgebildet ist, wobei mittels des nachgiebigen Bereiches die Flexibilität der Gegenfläche erreicht werden kann. Beispielsweise kann vorgesehen sein, dass die Gegenfläche an einem flügelartigen Element des Ringelementes ausgebildet ist, wobei das flügelartige Element im Bereich einer Verbindung zu einem Hauptkörper elastisch mit dem Hauptkörper gekoppelt ist. Das flügelartige Element kann auch als Flanke bezeichnet werden.

Darüber hinaus kann vorgesehen sein, dass sowohl das innere Ringelement als auch das äußere Ringelement V-förmig ausgebildet sind und axial zueinander beabstandet ein erstes Gleitlagerelement und ein zweites Gleitlagerelement ausgebildet sind, welche zwischen den Ringelementen angeordnet sind, wobei an jenem Ringelement, an welchem die Gegenfläche angeordnet ist, eine erste Flanke und eine zweite Flanke ausgebildet ist, wobei an jeder der beiden Flanken eine der Gegenflächen ausgebildet ist, wobei die Flanken jeweils elastisch nachgiebig ausgebildet sind.

Vorteilhaft ist auch eine Ausprägung, gemäß welcher vorgesehen sein kann, dass die Gegenfläche mittels eines Gelenkes nachgiebig mit dem Ringelement gekoppelt ist. Besonders durch diese Maßnahme kann die Flexibilität der Gegenfläche gesteigert werden. Beispielsweise kann vorgesehen sein, dass die Gegenfläche an einem dünnen Metallstreifen ausgebildet ist, wobei an der gegenüberliegenden Seite der Gegenfläche des Metallstreifens dieser gelenkig mit dem Ringelement gekoppelt ist.

Gemäß einer Weiterbildung ist es möglich, dass die Gegenfläche an einer flexiblen Struktur angeordnet ist sodass die Gegenfläche in sich nachgiebig ausgebildet ist. Dies stellt eine Alternativvariante zu jener Ausführung dar, in welcher die Gegenfläche als Ganzes nachgiebig ausgebildet ist.

Ferner kann es zweckmäßig sein, wenn die flexible Struktur eine Schicht umfasst, welche eine Schichtstärke zwischen 0,1mm und 15mm, insbesondere zwischen 1mm und 10mm, bevorzugt zwischen 2mm und 4mm aufweist, wobei an der Schicht die Gegenfläche ausgebildet ist, wobei unter der Schicht ein Auflagekissen ausgebildet ist. Durch diese Maßnahme kann eine flexible Struktur der Gegenfläche erreicht werden, durch welche eine übermäßige Beanspruchung des Gleitlagers unterbunden werden kann.

Darüber hinaus kann vorgesehen sein, dass das Auflagekissen einen viskosen Werkstoff umfasst. Insbesondere ein derart ausgebildetes Auflagekissen kann die auftretenden Druckkräfte gut aufnehmen bzw. verteilen, sodass sich die Gegenfläche an die Gleitfläche anpassen kann und eine gleichmäßige Flächenpressung an der Gegenfläche bzw. an der Gleitfläche erreicht werden kann.

Weiters kann vorgesehen sein, dass die erste Flanke und/oder die zweite Flanke über den Umfang gesehen segmentiert ausgebildet sind und jeweils mehrere Flankensegmente aufweisen.

Weiters kann vorgesehen sein, dass das Federelement über den Umfang gesehen segmentiert ausgebildet ist und mehrere Federelementsegmente aufweist.

Erfindungsgemäß ist eine Gondel für eine Windkraftanlage vorgesehen. Die Gondel umfasst:
- ein Gondelgehäuse;
- eine Rotornabe;
- eine Rotorlagerung zur Lagerung der Rotornabe am Gondelgehäuse. Die Rotorlagerung ist entsprechend den obigen Maßnahmen ausgebildet.

Weiters ist erfindungsgemäß eine Windkraftanlage mit einer Gondel vorgesehen. Die Gondel umfasst:
- ein Gondelgehäuse;
- eine Rotornabe mit daran angeordneten Rotorblättern;
- eine Rotorlagerung zur Lagerung der Rotornabe am Gondelgehäuse. Die Rotorlagerung ist nach einem der vorhergehenden Ansprüche ausgebildet.

Eine Gondel im Sinne dieses Dokumentes umfasst neben einem Gondelgehäuse auch eine Rotornabe und eine Rotorlagerung zur Lagerung der Rotornabe.

Das innere Ringelement bzw. das äußere Ringelement können jeweils als eigenständige Bauteile ausgebildet sein, welche mit der Rotornabe oder Rotorwelle bzw. mit dem Gondelgehäuse gekoppelt sein können. Alternativ dazu ist es auch denkbar, dass das innere Ringelement als integraler Bestandteil der Rotornabe bzw. der Rotorwelle ausgebildet ist. Alternativ dazu ist es auch denkbar, dass das äußere Ringelement als integraler Bestandteil der Rotornabe bzw. der Rotorwelle ausgebildet ist. Alternativ dazu ist es auch denkbar, dass das innere Ringelement als integraler Bestandteil des Gondelgehäuses ausgebildet ist. Alternativ dazu ist es auch denkbar, dass das äußere Ringelement als integraler Bestandteil des Gondelgehäuses ausgebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: ein Querschnitt einer Gondel in einer stark schematischen Darstellung;
- Fig. 3: ein zweites Ausführungsbeispiel der Rotorlagerung in einer Detailansicht X aus Fig. 2;
- Fig. 4: ein drittes Ausführungsbeispiel der Rotorlagerung in einer Detailansicht X aus Fig. 2;
- Fig. 5: ein viertes Ausführungsbeispiel der Rotorlagerung in einer Detailansicht X aus Fig. 2;
- Fig. 6: ein fünftes Ausführungsbeispiel der Rotorlagerung in einer Detailansicht X aus Fig. 2;
- Fig. 7: ein sechstes Ausführungsbeispiel der Rotorlagerung in einer Detailansicht X aus Fig. 2;
- Fig. 8: ein siebtes Ausführungsbeispiel der Rotorlagerung in einer Detailansicht X aus Fig. 2.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

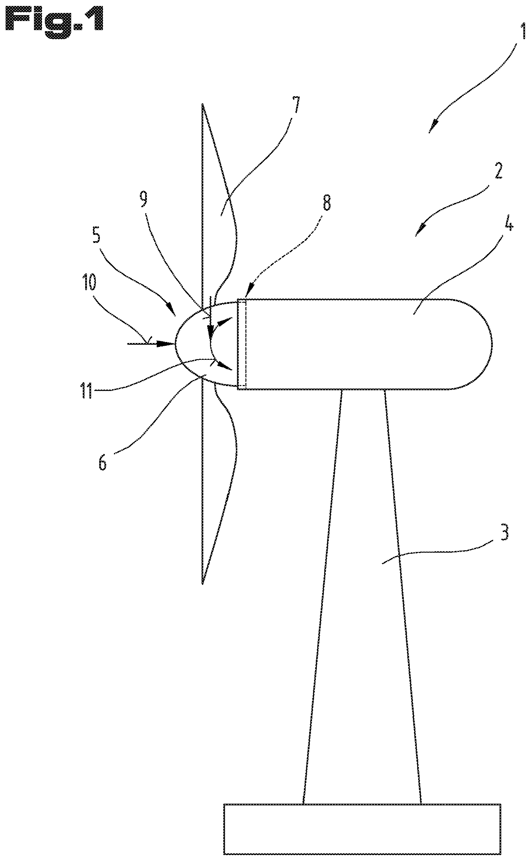

Fig. 1 zeigt eine schematische Darstellung einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elektrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 ist mittels einer Rotorlagerung 8 drehbeweglich am Gondelgehäuse 4 aufgenommen.

Die Rotorlagerung 8, welche zur Lagerung der Rotornabe 6 am Gondelgehäuse 4 der Gondel 2 dient, ist zur Aufnahme einer Radialkraft 9, einer Axialkraft 10 und eines Kippmomentes 11 ausgebildet. Die Axialkraft 10 ist bedingt durch die Kraft des Windes. Die Radialkraft 9 ist bedingt durch die Gewichtskraft des Rotors 5 und greift am Schwerpunkt des Rotors 5 an. Da der Schwerpunkt des Rotors 5 außerhalb der Rotorlagerung 8 liegt, wird in der Rotorlagerung 8 durch die Radialkraft 9 das Kippmoment 11 hervorgerufen. Das Kippmoment 11 kann ebenfalls durch eine ungleichmäßige Belastung der Rotorblätter 7 hervorgerufen werden.

Die erfindungsgemäße Rotorlagerung 8 kann beispielsweise einen Durchmesser zwischen 0,5 m und 5 m aufweisen. Natürlich ist es auch denkbar, dass die Rotorlagerung 8 kleiner oder größer ist.

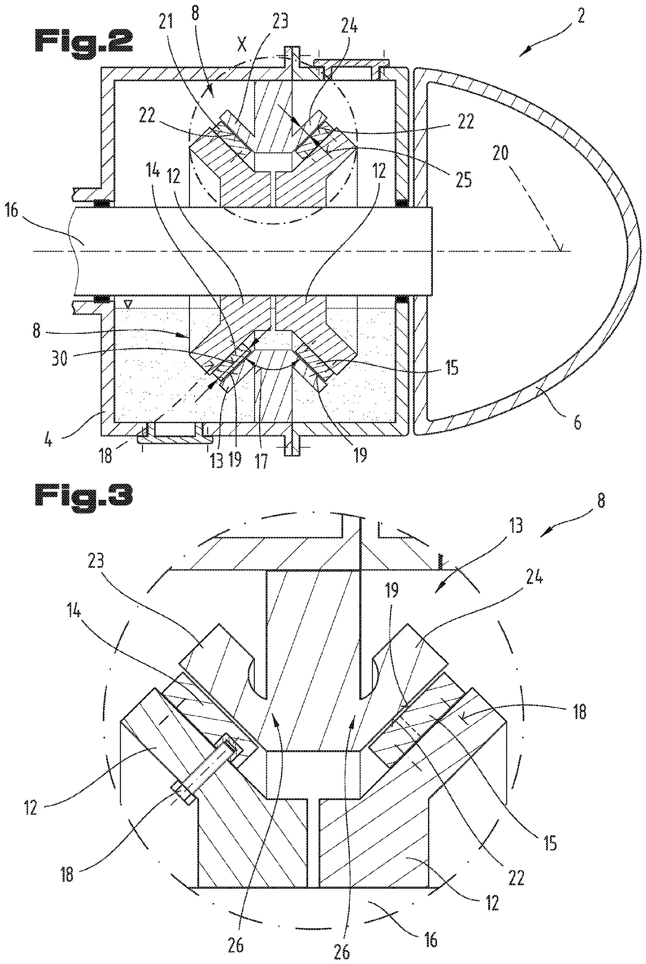

In Fig. 2 ist das Gondelgehäuse 4 und die Rotornabe 6 in einer schematischen Schnittdarstellung dargestellt, wobei der Aufbau, insbesondere in dessen Dimensionierung stark schematisiert wurde. Wie aus Fig. 2 ersichtlich, kann vorgesehen sein, dass die Rotorlagerung 8 zumindest ein inneres Ringelement 12 und zumindest ein äußeres Ringelement 13 aufweist. Zwischen dem inneren Ringelement 12 und dem äußeren Ringelement 13 ist zumindest ein Gleitlagerelement 14, 15 angeordnet. Insbesondere kann vorgesehen sein, dass zwischen dem inneren Ringelement 12 und dem äußeren Ringelement 13 ein erstes Gleitlagerelement 14 und ein zweites Gleitlagerelement 15 angeordnet ist.

Wie aus Fig. 2 ersichtlich, kann vorgesehen sein, dass das innere Ringelement 12 mit der Rotornabe 6 gekoppelt ist. Insbesondere kann vorgesehen sein, dass eine Rotorwelle 16 ausgebildet ist, an welcher die Rotornabe 6 angeordnet ist. Das innere Ringelement 12 kann direkt an der Rotorwelle 16 aufgenommen sein.

In einem weiteren, nicht dargestellten Ausführungsbeispiel kann natürlich auch vorgesehen sein, dass das innere Ringelement 12 direkt an der Rotornabe 6 aufgenommen ist.

In wieder einem weiteren, nicht dargestellten Ausführungsbeispiel kann natürlich auch vorgesehen sein, dass das innere Ringelement 12 am Gondelgehäuse 4 befestigt ist, und dass die Rotornabe 6 mit dem äußeren Ringelement 13 gekoppelt ist.

Wie aus Fig. 2 ersichtlich, kann vorgesehen sein, dass sowohl das innere Ringelement 12 als auch das äußere Ringelement 13 V-förmig ausgebildet sind und jeweils an der V-förmigen Flanke zwischen den beiden Ringelementen 12, 13 axial zueinander beabstandet die zwei Gleitlagerelemente 14, 15 ausgebildet sind. Insbesondere kann vorgesehen sein, dass die beiden Gleitlagerelemente 14, 15 in einem Winkel 17 zueinander angeordnet sind.

Wie aus Fig. 2 ersichtlich, kann in einem Ausführungsbeispiel vorgesehen sein, dass die Gleitlagerelemente 14 mittels Befestigungsmittel 18 am inneren Ringelement 12 befestigt sind. Somit kann zwischen den Gleitlagerelementen 14, 15 und dem äußeren Ringelement 13 eine Gleitfläche 19 ausgebildet sein. Bei einer Anordnung der Gleitlagerelemente 14, 15, wie sie in Fig. 2 dargestellt ist, können die Gleitflächen 19 ebenfalls V-förmig angeordnet sein.

In einer nicht dargestellten Ausführungsvariante kann auch vorgesehen sein, dass das Gleitlagerelement 14, 15 zwischen den beiden Ringelementen 12, 13 als Radiallager und/oder als Axiallager ausgebildet ist.

Wie aus Fig. 2 ebenfalls ersichtlich, kann vorgesehen sein, dass das innere Ringelement 12 bezüglich dessen axialer Erstreckung geteilt ausgeführt ist, um den Zusammenbau der Rotorlagerung 8 zu erleichtern.

In einem nicht dargestellten Ausführungsbeispiel ist es natürlich auch denkbar, dass das innere Ringelement 12 nicht wie im in Fig. 2 dargestellten Ausführungsbeispiel eine Nut bildet, sondern die V-Förmige Anordnung umgekehrt ausgebildet ist, sodass am inneren Ringelement 12 ein V-Förmiger Vorsprung ausgebildet ist. In diesem Fall kann zum leichteren Zusammenbau vorgesehen sein, dass das äußeren Ringelement 13 in dessen axialer Erstreckung geteilt ausgeführt ist.

Insbesondere kann vorgesehen sein, dass die Gleitlagerelemente 14, 15 um eine Rotorachse 20 herum angeordnet sind.

Weiters kann vorgesehen sein, dass das Gleitlagerelement 14, 15 mehrere Gleitlagerpads 21 aufweist, welche über den Umfang verteilt angeordnet sind. Die einzelnen Gleitlagerpads 21 können mittels der Befestigungsmittel 18 mit dem inneren Ringelement 12 gekoppelt bzw. an diesem befestigt sein. Insbesondere kann vorgesehen sein, dass die einzelnen Gleitlagerpads 21 mittels der Befestigungsmittel 18 unabhängig voneinander vom inneren Ringelement 12 lösbar sind. Dadurch können die einzelnen Gleitlagerpads 21 einzeln und unabhängig voneinander aus deren Betriebsposition entfernt bzw. ausgetauscht werden.

Wie aus Fig. 2 weiters ersichtlich, ist im vorliegenden Ausführungsbeispiel am äußeren Ringelement 13 eine Gegenfläche 22 ausgebildet, welche mit der Gleitfläche 19 zusammenwirkt. Weiter ist aus dem vorliegenden Ausführungsbeispiel ersichtlich, dass vorgesehen sein kann, dass am äußeren Ringelement 13 eine erste Flanke 23 und eine zweite Flanke 24 ausgebildet sind, an welchem jeweils die Gegenfläche 22 angeordnet ist. Insbesondere kann vorgesehen sein, dass mittels der ersten Flanke 23 und mittels der zweiten Flanke 24 die V-förmige Struktur des äußeren Ringelements 13 realisiert ist.

Weiters kann vorgesehen sein, dass eine Wandstärke 25 der Flanken 23, 24 so gering gewählt ist, dass die Flanken 23, 24 elastisch nachgiebig ausgebildet sind.

In der Fig. 3 ist in einer Detailansicht X aus Fig. 2 eine weitere und gegebenenfalls für sich eigenständige Ausführungsform der Rotorlagerung 8 gezeigt, wobei wiederum für gleiche Teile gleiche Bezugszeichen bzw. Bauteilbezeichnungen wie in den vorangegangenen Figuren 1 bis 2 verwendet werden. Um unnötige Wiederholungen zu vermeiden, wird auf die detaillierte Beschreibung in den vorangegangenen Figuren 1 bis 2 hingewiesen bzw. Bezug genommen.

Wie aus Fig. 3 ersichtlich, kann vorgesehen sein, dass ein Abschnitt des äußeren Ringelements 13, insbesondere ein Abschnitt der Flanken 23, 24 einen nachgiebigen Bereich 26 aufweist, welcher derart ausgebildet ist, dass die Flanken 23, 24 als Ganzes nachgiebig ausgebildet sind. Die nachgiebigen Bereiche 26 können beispielsweise durch Verjüngungen im Querschnitt der Flanken 23, 24 ausgebildet sein.

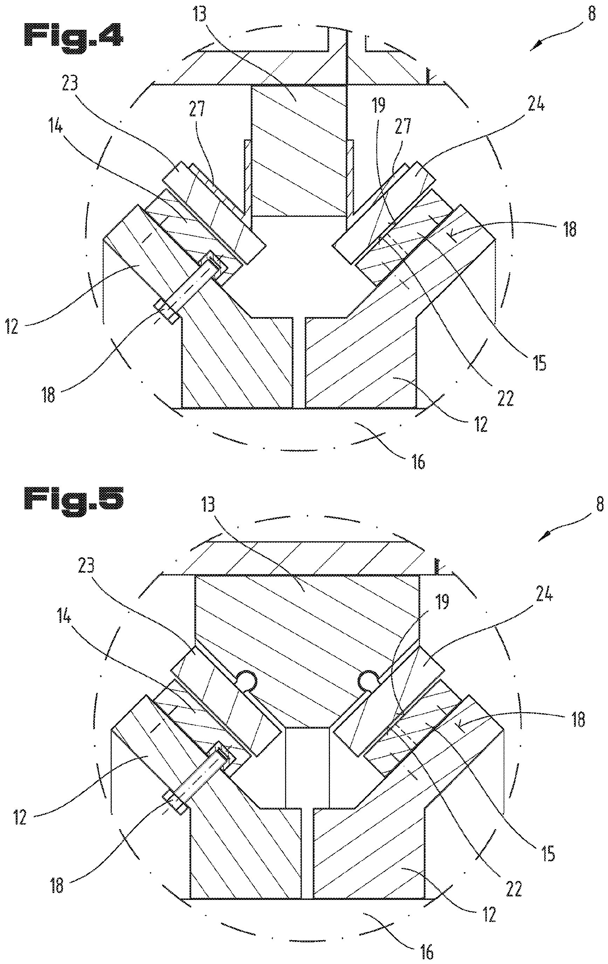

In der Fig. 4 ist in einer Detailansicht X aus Fig. 2 eine weitere und gegebenenfalls für sich eigenständige Ausführungsform der Rotorlagerung 8 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass die beiden Flanken 23, 24, an welchen die Gegenflächen 22 ausgebildet sind, in Form von eigenständigen Bauteilen ausgebildet sind, welche mittels eines Federelementes 27 mit dem äußeren Ringelement 13 gekoppelt sind. Durch die Federelemente 27 kann eine flexible Anbindung der Flanken 23, 24 an das äußere Ringelement 13 geschaffen werden. Insbesondere kann vorgesehen sein, dass bei einem derartigen Ausführungsbeispiel die erste Flanke 23 und/oder die zweite Flanke 24 über den Umfang gesehen segmentiert ausgebildet ist und jeweils mehrere Flankensegmente aufweisen. Analog dazu kann vorgesehen sein, dass das Federelement 27 ebenfalls über den Umfang gesehen segmentiert ausgebildet ist und mehrere Federelementsegmente aufweist. Insbesondere kann vorgesehen sein, dass eine Teilung der Flankensegmente und der Federelementsegmente gleich gewählt ist, sodass je Federelementsegment ein Flankensegment aufgenommen wird.

In der Fig. 5 ist in einer Detailansicht X aus Fig. 2 eine weitere und gegebenenfalls für sich eigenständige Ausführungsform der Rotorlagerung 8 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann vorgesehen sein, dass die erste Flanke 23 bzw. die zweite Flanke 24 jeweils mittels eines Gelenkes 28 mit dem äußeren Ringelement 13 gekoppelt ist und somit die Nachgiebigkeit der Gegenflächen 22 erreicht werden kann. Die Flanken 23, 24 können hierbei ebenfalls segmentiert ausgebildet sein.

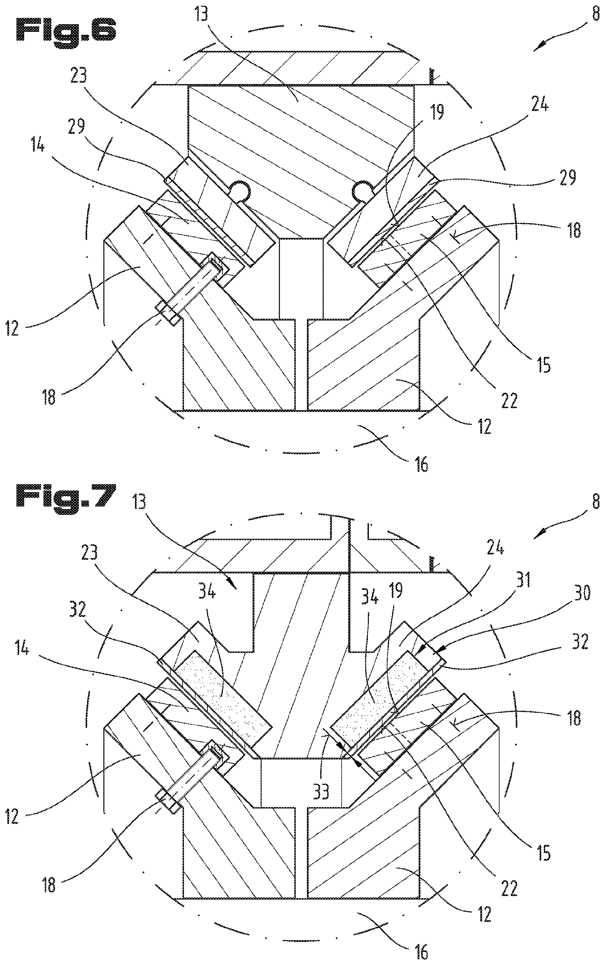

In der Fig. 6 ist in einer Detailansicht X aus Fig. 2 eine weitere und gegebenenfalls für sich eigenständige Ausführungsform der Rotorlagerung 8 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Fig. 6 zeigt ein weiteres Ausführungsbeispiel der Rotorlagerung 8. Wie aus Fig. 6 ersichtlich, kann vorgesehen sein, dass bei einer segmentierten Ausführung der Flanken 23, 24 jeweils ein umlaufendes Auflageelement 29 vorgesehen ist, an welchem die Gegenfläche 22 ausgebildet ist. Das umlaufende Auflageelement 29 bringt den Vorteil mit sich, dass eine durchgängige Oberfläche der Gegenfläche 22 erreicht werden kann, wodurch der Verschleiß der Gleitlagerelemente 14, 15 vermindert werden kann. Ein derartiges Auflageelement 29 kann natürlich bei allen Ausführungsvarianten in denen segmentierte Flanken 23, 24 vorgesehen sind, verwendet werden.

In der Fig. 7 ist in einer Detailansicht X aus Fig. 2 eine weitere und gegebenenfalls für sich eigenständige Ausführungsform der Rotorlagerung 8 gezeigt, wobei wiederum für gleiche Teile gleiche Bezugszeichen bzw. Bauteilbezeichnungen wie in den vorangegangenen Figu- ren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Wie aus Fig. 7 ersichtlich, kann vorgesehen sein, dass direkt im äußeren Ringelement 13 eine flexible Struktur 30 ausgebildet ist, durch welche die Gegenfläche 22 in sich nachgiebig ausgebildet sein kann. Insbesondere kann vorgesehen sein, dass in der ersten Flanke 23 bzw. in der zweiten Flanke 24 ein Hohlraum 31 ausgebildet ist, welcher von einer Schicht 32 abgedeckt ist, an welcher die Gegenfläche 22 ausgebildet ist. Eine Schichtstärke 33 der Schicht 32 kann hierbei so gering gewählt werden, dass die Schicht 32 in sich verformbar ausgebildet ist. Um die Schicht 32 stützen zu können, kann vorgesehen sein, dass im Hohlraum 31 ein Auflagekissen 34 angeordnet ist, mittels welchem die auf die Schicht 32 wirkende Druckkraft gleichmäßig aufgeteilt werden kann. Das Auflagekissen 34 kann beispielsweise durch ein Gel bzw. durch ein Fluid gebildet sein bzw. dieses umfassen.

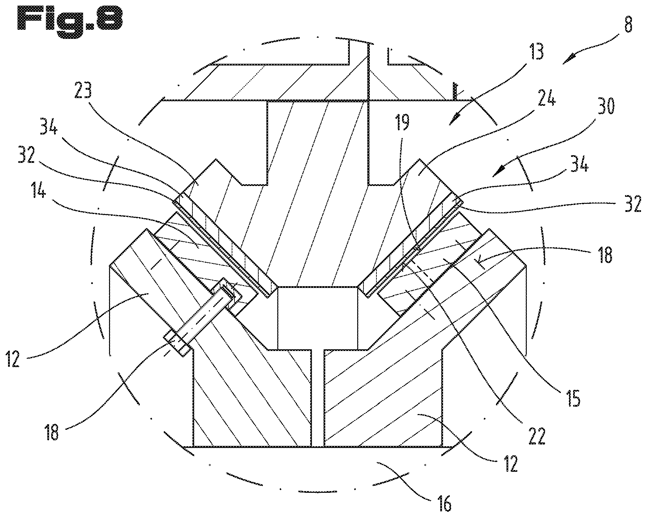

In der Fig. 8 ist in einer Detailansicht X aus Fig. 2 eine weitere und gegebenenfalls für sich eigenständige Ausführungsform der Rotorlagerung 8 gezeigt, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Wie aus Fig. 8 ersichtlich, kann vorgesehen sein, dass das Auflagekissen 34 direkt an der ersten Flanke 23 bzw. an der zweiten Flanke 24 angeordnet ist und dass am Auflagekissen 34 die Schicht 32 angeordnet bzw. ausgebildet ist. Bei einem derartigen Ausführungsbeispiel kann die Schicht 32 aus einem weichelastischen Material, wie beispielsweise Gummi, ausgebildet sein. Die Schicht 32 kann beispielsweise in Form eines Metalls ausgebildet sein, welches am Auflagekissen 34 angeordnet ist.

Alternativ dazu kann auch vorgesehen sein, dass die Schicht 32 durch einen sonstigen Werkstoff gebildet wird, welcher auf das Auflagekissen 34 aufgetragen wird. Beispielsweise kann vorgesehen sein, dass die Schicht 32 in Form eines Gleitlackes ausgebildet ist, welcher auf das Auflagekissen 34 aufgetragen ist. Insbesondere kann hierbei vorgesehen sein, dass das Material der Schicht 32 verformbar ausgebildet ist.

In den Ausführungsbeispielen aus den Fig. 2 bis 8 ist die Gegenfläche 22 am äußeren Ringelement 13 angeordnet und die Gleitfläche 19 am inneren Ringelement 12 angeordnet. Analog zu diesen einzelnen Ausführungsvarianten kann natürlich auch vorgesehen sein, dass die Gegenfläche 22 am inneren Ringelement 12 angeordnet ist und die Gleitfläche 19 am äußeren Ringelement 13 angeordnet ist. Es liegt im Können des Fachmanns die entsprechend umgedrehte Situation zwischen inneren Ringelement 12 und äußerem Ringelement 13 von den gezeigten Ausführungsbeispielen abzuleiten.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Windkraftanlage | 31 | Hohlraum |
| 2 | Gondel | 32 | Schicht |
| 3 | Turm | 33 | Schichtstärke |
| 4 | Gondelgehäuse | 34 | Auflagekissen |
| 5 | Rotor | | |
| 6 | Rotornabe | | |
| 7 | Rotorblatt | | |
| 8 | Rotorlagerung | | |
| 9 | Radialkraft | | |
| 10 | Axialkraft | | |
| 11 | Kippmoment | | |
| 12 | inneres Ringelement | | |
| 13 | äußeres Ringelement | | |
| 14 | erstes Gleitlagerelement | | |
| 15 | zweites Gleitlagerelement | | |
| 16 | Rotorwelle | | |
| 17 | Winkel | | |
| 18 | Befestigungsmittel | | |
| 19 | Gleitfläche | | |
| 20 | Rotorachse | | |
| 21 | Gleitlagerpad | | |
| 22 | Gegenfläche | | |
| 23 | erste Flanke | | |
| 24 | zweite Flanke | | |
| 25 | Wandstärke Flanke | | |
| 26 | nachgiebiger Bereich | | |
| 27 | Federelement | | |
| 28 | Gelenk | | |
| 29 | Auflageelement | | |
| 30 | flexible Struktur | | |

## Patentansprüche

1. Rotorlagerung (8) zur Lagerung einer Rotornabe (6) an einem Gondelgehäuse (4) einer Gondel (2) für eine Windkraftanlage (1), wobei die Rotorlagerung (8) zumindest ein inneres Ringelement (12) und zumindest ein äußeres Ringelement (13) aufweist, wobei zwischen dem inneren Ringelement (12) und dem äußeren Ringelement (13) zumindest ein Gleitlagerelement (14, 15) angeordnet ist, welches am inneren Ringelement (12) oder am äußeren Ringelement (13) befestigt ist, wobei am Gleitlagerelement (14, 15) eine Gleitfläche (19) ausgebildet ist, welche mit einer Gegenfläche (22) zusammenwirkt, die mit jenem Ringelement (12, 13) gekoppelt ist, an welchem das Gleitlagerelement (14, 15) nicht befestigt ist,
**dadurch gekennzeichnet, dass** die Gegenfläche (22) nachgiebig ausgebildet ist.

2. Rotorlagerung (8) nach Anspruch 1, **dadurch gekennzeichnet, dass** die Gegenfläche (22) mit einem Federelement (27) gekoppelt ist, welches an jenem Ringelement (12, 13) befestigt ist, an welchem das Gleitlagerelement (14, 15) nicht befestigt ist.

3. Rotorlagerung (8) nach Anspruch 1 oder 2, **dadurch gekennzeichnet, dass** ein Abschnitt jenes Ringelementes (12, 13) an welchem die Gegenfläche (22) ausgebildet ist, einen nachgiebigen Bereich (26) aufweist.

4. Rotorlagerung (8) nach Anspruch 3, **dadurch gekennzeichnet, dass** sowohl das innere Ringelement (12) als auch das äußere Ringelement (13) V-förmig ausgebildet sind und axial zueinander beabstandet ein erstes Gleitlagerelement (14) und ein zweites Gleitlagerelement (15) ausgebildet sind, welche zwischen den Ringelementen (12, 13) angeordnet sind, wobei an jenem Ringelement (12, 13), an welchem die Gegenfläche (22) angeordnet ist, eine erste Flanke (23) und eine zweite Flanke (24) ausgebildet ist, wobei an jeder der beiden Flanken (23, 24) eine der Gegenflächen (22) ausgebildet ist, wobei die Flanken (23, 24) jeweils elastisch nachgiebig ausgebildet sind.

5. Rotorlagerung (8) nach einem der vorhergehenden Ansprüche, **dadurch gekennzeichnet, dass** die Gegenfläche (22) mittels eines Gelenkes (28) nachgiebig mit dem Ringelement (12, 13) gekoppelt ist.

6. Rotorlagerung (8) nach einem der vorhergehenden Ansprüche, **dadurch gekennzeichnet, dass** die Gegenfläche (22) an einer flexiblen Struktur (30) angeordnet ist sodass die Gegenfläche (22) in sich nachgiebig ausgebildet ist.

7. Rotorlagerung (8) nach Anspruch 6, **dadurch gekennzeichnet, dass** die flexible Struktur (30) eine Schicht (32) umfasst, welche eine Schichtstärke (33) zwischen 0,1mm und 15mm, insbesondere zwischen 1mm und 10mm, bevorzugt zwischen 2mm und 4mm aufweist, wobei an der Schicht (32) die Gegenfläche (22) ausgebildet ist, wobei unter der Schicht (32) ein Auflagekissen (34) ausgebildet ist.

8. Rotorlagerung (8) nach Anspruch 7, **dadurch gekennzeichnet, dass** das Auflagekissen (34) einen viskosen Werkstoff umfasst.

9. Gondel (2) für eine Windkraftanlage (1), die Gondel (2) umfassend:
- ein Gondelgehäuse (4);
- eine Rotornabe (6);
- eine Rotorlagerung (8) zur Lagerung der Rotornabe (6) am Gondelgehäuse (4), **dadurch gekennzeichnet, dass** die Rotorlagerung (8) nach einem der vorhergehenden Ansprüche ausgebildet ist.

10. Windkraftanlage (1) mit einer Gondel (2), die Gondel (2) umfassend:
- ein Gondelgehäuse (4);
- eine Rotornabe (6) mit daran angeordneten Rotorblättern;
- eine Rotorlagerung (8) zur Lagerung der Rotornabe (6) am Gondelgehäuse (4), **dadurch gekennzeichnet, dass** die Rotorlagerung (8) nach einem der Ansprüche 1 bis 8 ausgebildet ist.

## Claims

1. A rotor bearing (8) for bearing a rotor hub (6) on a nacelle housing (4) of a nacelle (2) for a wind turbine (1), wherein the rotor bearing (8) has at least one inner ring element (12) and at least one outer ring element (13), wherein at least one sliding bearing element (14, 15) is arranged between the inner ring element (12) and the outer ring element (13), which sliding bearing element (14, 15) is fastened to the inner ring element (12) or to the outer ring element (13), wherein a sliding surface (19) is formed on the sliding bearing element (14, 15), which sliding bearing element (14, 15) cooperates with a counterface (22), which is coupled with that ring element (12, 13) to which the sliding bearing element (14, 15) is not fastened,
**characterized in that** the counterface (22) is designed to be flexible.

2. The rotor bearing (8) according to claim 1, **characterized in that** the counterface (22) is coupled with a spring element (27), which is fastened to that ring element (12, 13), to which the sliding bearing element (14, 15) is not fastened.

3. The rotor bearing (8) according to claim 1 or 2, **characterized in that** a section of that ring element (12, 13), on which the counterface (22) is formed, has a flexible region (26).

4. The rotor bearing (8) according to claim 3, **characterized in that** both the inner ring element (12) and the outer ring element (13) are designed to be V-shaped, and a first sliding bearing element (14) and a second sliding bearing element (15) are formed to be axially spaced apart from each other, which sliding bearing elements (14, 15) are arranged between the ring elements (12, 13), wherein on that ring element (12, 13), on which the counterface (22) is arranged, a first flank (23) and a second flank (24) is formed, wherein on each of the two flanks (23, 24), one of the counterfaces (22) is formed, wherein the flanks (23, 24) are each designed to be elastically flexible.

5. The rotor bearing (8) according to one of the preceding claims, **characterized in that** the counterface (22) is flexibly coupled with the ring element (12, 13) by means of a joint (28).

6. The rotor bearing (8) according to one of the preceding claims, **characterized in that** the counterface (22) is arranged on a flexible structure (30), so that the counterface (22) is designed to be flexible in itself.

7. The rotor bearing (8) according to claim 6, **characterized in that** the flexible structure (30) comprises a layer (32) which has a layer thickness (33) of between 0.1 mm and 15 mm, in particular between 1 mm and 10 mm, preferably between 2 mm and 4 mm, wherein the counterface (22) is formed on the layer (32), wherein a support cushion (34) is formed under the layer (32).

8. The rotor bearing (8) according to claim 7, **characterized in that** the support cushion (34) comprises a viscous material.

9. A nacelle (2) for a wind turbine (1), the nacelle (2) comprising:
- a nacelle housing (4);
- a rotor hub (6);
- a rotor bearing (8) for bearing the rotor hub (6) on the nacelle housing (4), **characterized in that** the rotor bearing (8) is formed according to one of the preceding claims.

10. A wind turbine (1) having a nacelle (2), the nacelle (2) comprising:
- a nacelle housing (4);
- a rotor hub (6) with rotor blades arranged thereon;
- a rotor bearing (8) for bearing the rotor hub (6) on the nacelle housing (4),
**characterized in that** the rotor bearing (8) is formed according to one of claims 1 to 8.

## Revendications

1. Palier de rotor (8) pour le logement d'un moyeu de rotor (6) au niveau d'un boîtier de nacelle (4) d'une nacelle (2) pour une éolienne (1), dans lequel le palier de rotor (8) comprend au moins un élément annulaire interne (12) et un élément annulaire externe (13), dans lequel, entre l'élément annulaire interne (12) et l'élément annulaire externe (13), est disposé au moins un élément de palier lisse (14, 15) qui est fixé à l'élément annulaire interne (12) ou à l'élément annulaire externe (13), dans lequel, sur l'élément de palier lisse (14, 15), est réalisée une surface de glissement (19) qui interagit avec une contre-surface (22) qui est couplée avec l'élément annulaire (12, 13) sur lequel l'élément de palier lisse (14, 15) n'est pas fixé, **caractérisé en ce que** la contre-surface (22) est conçue de manière flexible.

2. Palier de rotor (8) selon la revendication 1, **caractérisé en ce que** la contre-surface (22) est couplée avec un élément de ressort (27) qui est fixé sur l'élément annulaire (12, 13) sur lequel l'élément de palier lisse (14, 15) n'est pas fixé.

3. Palier de rotor (8) selon la revendication 1 ou 2, **caractérisé en ce qu'**une portion de l'élément annulaire (12, 13) sur lequel la contre-surface (22) est réalisée comprend une zone flexible (26).

4. Palier de rotor (8) selon la revendication 3, **caractérisé en ce que** l'élément annulaire interne (12) ainsi que l'élément annulaire externe (13) présentent une forme de V et un premier élément de palier lisse (14) et un deuxième élément de palier lisse (15) sont prévus avec une distance axiale entre eux, qui sont disposés entre les éléments annulaires (12, 13), dans lequel, sur l'élément annulaire (12, 13) contre lequel est disposée la contre-surface (22), un premier flanc (23) et un deuxième flanc (24) sont réalisés, dans lequel, sur chacun des deux flancs (23, 24), est réalisée une des contre-surfaces (22), dans lequel les flancs (23, 24) sont conçus de manière flexible élastiquement.

5. Palier de rotor (8) selon l'une des revendications précédentes, **caractérisé en ce que** la contre-surface (22) est couplée au moyen d'une articulation (28) de manière flexible avec l'élément annulaire (12, 13).

6. Palier de rotor (8) selon l'une des revendications précédentes, **caractérisé en ce que** la contre-surface (22) est disposée sur une structure flexible (30) de façon à ce que la contre-surface (22) soit conçue de manière flexible en soi.

7. Palier de rotor (8) selon la revendication 6, **caractérisé en ce que** la structure flexible (30) comprend une couche (32) qui présente une épaisseur (33) entre 0,1 mm et 15 mm, plus particulièrement entre 1 mm et 10 mm, de préférence entre 2 mm et 4 mm, dans lequel, sur la couche (32), est réalisée la contre-surface (22), dans lequel, sous la couche (32), est réalisée un coussin d'appui (34).

8. Palier de rotor (8) selon la revendication 7, **caractérisé en ce que** le coussin d'appui (34) comprend un matériau visqueux.

9. Nacelle (2) pour une éolienne (1), cette nacelle (2) comprenant :
- un boîtier de nacelle (4) ;
- un moyeu de rotor (6) ;
- un palier de rotor (8) pour le logement du moyeu de rotor (6) au niveau du boîtier de nacelle (4), **caractérisé en ce que** le palier de rotor (8) est conçu selon l'une des revendications précédentes.

10. Éolienne (1) avec une nacelle (2), cette nacelle (2) comprenant :
- un boîtier de nacelle (4) ;
- un moyeu de rotor (6) avec des pales de rotor disposés sur celui-ci ;
- un palier de rotor (8) pour le logement du moyeu de rotor (6) au niveau du boîtier de nacelle (4), **caractérisé en ce que** le palier de rotor (8) est conçu selon l'une des revendications 1 à 8.
